# EUROPÄISCHE PATENTSCHRIFT

(11) **EP 0 974 563 B1**
(45) Veröffentlichungstag und Bekanntmachung des Hinweises auf die Patenterteilung: **14.12.2005**
(21) Anmeldenummer: 99810528.2
(22) Anmeldetag: 14.06.1999
(51) Int. Cl.: C04B 28/26, C04B 40/06

(54) **Verwendung eines feinzementhaltigen 2-Komponentenmörtel für Ankerstangen**
Use of a two components mortar containing fine cement for anchoring bolts
Utilisation d'un mortier à deux composants comntenant du ciment fin pour boulons d'ancrage

(30) Priorität: 21.07.1998 DE 19832666
(43) Veröffentlichungstag der Anmeldung: 26.01.2000
(73) Patentinhaber: HILTI Aktiengesellschaft, 9494 Schaan (LI)
(72) Erfinder: Gienau, Roland, 87679 Westendorf (DE); Krivenko, Pavel, 252037 Kiev (UA)

(56) Entgegenhaltungen:
- EP-A- 0 495 336
- FR-A- 2 398 878
- US-A- 4 338 048
- US-A- 5 730 557
- CHEMICAL ABSTRACTS + INDEXES,US,AMERICAN CHEMICAL SOCIETY. COLUMBUS, Bd. 97, Nr. 12, 20. Dezember 1982 (1982-12-20), Seite 326 XP000063973 ISSN: 0009-2258 & JP 82 063370 A (SUMITOMO CHEMICAL CO., LTD NIHON DEKORAKUS K.K.) 16. April 1982 (1982-04-16)

## Beschreibung

Gegenstand der Erfindung ist die Verwendung einer härtbaren 2-Komponenten-Mörtelmasse mit feinteiligem Zement als härtbaren Bestandteil und mit Wasserglas als Härter, wobei härtbarer Bestandteil und Härter einer Zwei- oder Mehrkammervorrichtung reaktionsinhibierend getrennt und unter Anwendungsbedingungen unter Mischen zur Reaktion bringbar sind, für die Befestigung von Ankerstangen und dergleichen Verankerungsmitteln in Bohrlöchern.

Zur Befestigung von Verankerungsmitteln wie Ankerstangen und dergleichen in Bohrlöchern sind zahlreiche 2-Komponentenmörtel bekannt. Unter 2-Komponentenmörteln werden härtbare Massen verstanden, die zB in Kartuschen oder Folienbeuteln, voneinander getrennt, härtbare Komponenten einerseits und Härter andererseits lagerfähig enthalten, wobei zur Einleitung der Härtung die Komponente zB unter Zerstörung der Trennwände im Bohrloch oder durch gemeinsames Auspressen der Folienbeutel in reaktionsfähigen Kontakt gebracht wird. Weit verbreitet sind 2-Komponentenmörtel, welche als härtbare Bestandteile polymerisierbare organische Verbindungen und, bis zum Einsatz zunächst hiervon getrennt, den entsprechenden Härter enthalten. Die früher ganz üblichen Zement- oder Gipsmörtel sind demgegenüber in den Hintergrund getreten.

Eine Vielzahl von Verankerungen wird in Bohrlöchern von mineralischem Aufnahmematerial im weitesten Sinne, wie natürlichem Gestein, wie Fels oder künstlichem Gestein, wie Beton, Ziegel, Kunst- oder Natursteinmauerwerk und dergleichen durchgeführt. Die Verwendung eines Zementmörtels für derartige Befestigungen, also einer mineralisch-silikatischen Masse für ein wiederum mineralisch-silikatisches Aufnahmematerial muss danach als systemkonform erscheinen.

Die vorliegende Erfindung betrifft eine Verbesserung einer solchen systemkonformen Mörtelmasse, insbesondere die Erzielung hoher Auszugswerte und Steuerung hoher Härtungsgeschwindigkeiten.

Die Lösung der gestellten Aufgabe gelingt durch die Verwendung einer härtbaren 2-Komponenten Mörtelmasse der eingangs angegebenen Art, welche dadurch gekennzeichnet ist, daß die Mörtelmasse 20 bis 55 Gew.-% feinteiligen Zement, bezogen auf das Gewicht der härterfreien Mörtelkomponente, mit einer spezifischen Oberfläche von 3 bis 8, insbesondere 4 bis 7 m²/g nach BET aufweist, enthält. Anstelle des sich in besonderem Masse bewährten feinteiligen Zements können auch Mischungen eines solchen Zements mit Zementen üblicher Komgrösse verwendet werden. Es hat sich indessen gezeigt, dass der Anteil eines feinkörnigen Zements möglichst mindestens etwa 40 Gew.-%, bezogen auf das Gesamtgewicht des Zements, ausmachen sollte, wenn auch in Sonderfällen niedrigere Anteile an feinteiligem Zement durchaus brauchbar sind. Unter feinteiligem Zement im Sinne der vorliegenden Erfindung werden Zemente verstanden mit spezifischen Oberflächen von 3 bis 8, insbesondere von 4 bis 7 m²/g (nach BET). Als Zemente sind insbesondere Portlandzemente, Aluminat- bzw. Tonerdeschmelzzemente und deren Mischungen bevorzugt. Dabei wirkt sich das Einbringen von Al-haltigen Verbindungen, die während der Härtungsreaktion Al-Ionen zur Bildung von Erhärtungsprodukten zur Verfügung stellen, wie Aluminatzemente vorteilhaft auf die Stabilität des Erhärtungsprodukts aus.

Als Alkaliwasserglas hat sich vor allen Dingen Natriumwasserglas, aber auch Kaliumwasserglas bzw. Gemische dieser beiden bewährt. Bei der erfindungsgemässen Verwendung von Gemischen von feinteiligem Zement mit Wasserglas läuft die Härtungsreaktion vergleichsweise sehr schnell und im merklichen Umfang auch in Richtung der Bildung zeolithischer Verbindungen ab. Verwendbar sind Wasserglaszubereitungen, deren Alkalisilikatkonzentration meist zwischen 20 und 60 Gew.-%, bezogen auf das Gesamtgewicht von wässrigem Träger und Alkalisilikat liegt. Einfacherweise sind handelsübliche Konzentrationen von 30 bis 55 Gew.-% bevorzugt. Die Konzentration bezieht sich hierbei auf das Wasserglasgesamtgewicht, wobei dem enthaltenen Alkalisilikat analytisch auch etwaige Niederschläge, wie beispielsweise mehr oder weniger hydratisiertes Siliciumdioxid hinzugerechnet werden. Das Gewichtsverhältnis von dem im Wasserglas als Härter enthaltenen Wasser zu Zement ist nicht extrem kritisch, sollte aber bei Verwendung von Wassergläsern üblicher Konzentration im Bereich von etwa 0,2 bis 2,5 zu 1, insbesondere 0,3 bis 1,7 zu 1 liegen.

Die erfindungsgemäss verwendete 2-Komponentenmörtelmasse kann übliche, zB auch bekannte Mörtelzusätze, wie beispielsweise Füllmittel, Verdicker, Lösungsmittel, Dispergiermittel, Thixotropiermittel, inerte flüssige Träger, Stabilisatoren, Mittel zur Steuerung der Härtungsgeschwindigkeit, Netzmittel und/oder dergleichen enthalten, wobei diese Zusätze in der Komponente, die den härtbaren Bestandteil und/oder den Härter enthält, enthalten sein können. Als Füllmittel können Sand, Quarz, Steinmehl, Kreide, Kaolin, organische Fasern und dergleichen in Mengen bis zu 80 Gew.-%, bezogen auf das Mörtelgesamtgewicht, enthalten sein. Die den härtbaren Zement enthaltende Komponente kann, um das Vermischen zu erleichtern, bekannte Zusätze wie Phthalate, Mineralöl, Rizinusöl oder Isofole enthalten. Die Viskosität solcher inerter Träger enthaltender Zementpasten kann durch Verdickungsmittel, Thixotropiermittel wie pyrogene Kieselsäure und dergleichen gesteuert werden. Ebenso kann auch die Wasserglasviskosität durch die üblichen, Viskositäts- und Thixotropie-beeinflussenden Zusätze gesteuert werden, zur Förderung des Mischvorganges der härtbaren Komponente mit der Härterkomponente.

Vorzugweise enthalten die erfindungsgemäss verwendeten Mörtelmassen 25 bis 45 Gew.-% feinteiligen Zement, bezogen auf das Gewicht der härterfreien Mörtelkomponente.

Es hat sich gezeigt, dass die erfindungsgemäss verwendete Mörtelmasse ausserordentlich schnell härtet. Eine gewisse Härtungsverzögerung ist erreichbar durch die Verwendung eines Zements, der neben dem erfindungsgemäss eingesetzten feinteiligen Zement auch Zementanteile eines gröberen Korns wie etwa Standardzemente mit einer spezifischen Oberfläche von 0,5 bis 1,1 nach BET enthält. Erfindungsgemäss kann die Steuerung der Härtung auch durch härtungsverzögernde Substanzen, vorzugsweise Alkaliphosphate, wie Trinatriumorthophosphat einschliesslich der Hydrate, erfolgen.

Gegenstand der Erfindung ist weiter die Verwendung der härtbaren 2-Komponentenmörtelmasse mit feinteiligem Zement und Wasserglas als Zwei- oder Mehrkammervorrichtung zur Befestigung von Verankerungsmitteln in Bohrlöchern.

Gegenstand der Erfindung ist auch die Verwendung der erfindungsgemässen, voranstehend erörterten 2-Komponenten-Mörtelmasse mit feinteiligem Zement als härtbare Bestandteile und Alkaliwasserglas als Härter zur Befestigung von Verankerungsmitteln wie Ankerstangen und dergleichen in Bohrlöchern. Insbesondere betrifft auch die Erfindung die Konfektionierung der erfindungsgemässen 2-Komponenten-Mörtel in Zwei- und Mehrkammersystemen. Hierzu gehören insbesondere Patronen aus Glas, Kunststoff oder Keramik, in deren Innerem die härtbaren Bestandteile von dem jeweiligen Härter durch zerstörbare Wandungen voneinander getrennt angeordnet sind. Solche Patronensysteme werden in die Bohrlöcher eingesetzt, wobei zur Einleitung der Härtungsreaktion die Patronen einschliesslich der darin befindlichen Trennwandungen zerstört werden, beispielsweise unter Eintreiben der Ankerstange. Zu solchen Zwei- und Mehrkammersystemen gehören auch Foliensysteme mit zwei oder mehr Folienbeutel zur Trennung von härtbaren Bestandteilen und Härtern, wobei der Inhalt der Folienbeutel gemeinsam zB über einen Statikmischer, in ein Bohrloch injiziert werden kann. Diese Patronen- und Foliensysteme enthalten wie zuvor erläutert neben den reaktionshindernd getrennten reaktiven Bestandteilen weitere Mörtelbestandteile wie zB Füllmittel, Lösungsmittel, Verdicker, Thixotropiermittel, härtungssteuernde Mittel und dergleichen.

### Beispiel

| | |
|---|---|
| Na-Wasserglas (GVZ = 2,7) | 20,8 Gew.-% |
| Na-Phosphat-Verzögerer | 0,8 Gew.-% |
| Quarzsand (mittlere Korngrösse 0,24 mm) | 39,8 Gew.-% |
| Quarzmehl (spez. Oberfläche ca. 0,9 m²/g BET) | 24,3 Gew.-% |
| Portlandzement (spez. Oberfläche ca. 4,4 m²/g BET) | 9,3 Gew.-% |
| Rizinusöl | 5,0 Gew.-% |

Das Wasserglas ist bei Zwei-Kammersystemen in der einen Kammer, Zement und Rizinusöl in der anderen Kammer enthalten, wobei die Quarz-Füll- bzw. Verdickungsmittel meist in der Wasserglas-Kammer, gegebenenfalls aber auch auf beide Kammern verteilt enthalten sein können.

## Patentansprüche

1. Verwendung einer härtbaren 2-Komponenten-Mörtelmasse mit feinteiligem Zement als härtbarem Bestandteil und mit Wasserglas als Härter, wobei härtbarer Bestandteil und Härter in einer Zwei- oder Mehrkammervorrichtung reaktionsinhibierend getrennt und unter Anwendungsbedingungen unter Mischen zur Reaktion bringbar sind für Befestigung von Ankerstangen und dergleichen Verankerungsmitteln in Bohrlöchern**dadurch gekennzeichnet, daß** die Mörtelmasse 20 - 55 Ges.-% feinteiligen Zement, bezogen auf das Gewicht der härterfreien Mörtelkomponente, mit einer spezifischen Oberfläche von 3 bis 8, insbesondere 4 bis 7 m²/g nach BET aufweist, enthält.

2. Verwendung gemäß Patentanspruch 1, **dadurch gekennzeichnet, daß** das Alkaliwasserglas Na- und/oder K-Wasserglas ist.

3. Verwendung gemäß einem der vorhergehenden Patentansprüche,**dadurch gekennzeichnet, daß** die Alkalisilikat-Konzentration 20 - 60 Gew.-% beträgt, bezogen auf das wässrige Wasserglas-Gesamtgewicht.

4. Verwendung gemäß einem der vorhergehenden Patentansprüche, **dadurch gekennzeichnet, daß** das Gewichtsverhältnis von dem im Wasserglas enthaltenen Wasser zu Zement 0,2 bis 2,5 zu 1, vorzugsweise 0,3 bis 1,7 zu 1 beträgt.

5. Verwendung gemäß einem der vorhergehenden Patentansprüche, **dadurch gekennzeichnet, daß** zusätzlich Füllmittel, Verdicker, Lösungsmittel, Dispergiermittel, Thixotropiermittel, inerte flüssige Träger, Stabilisatoren, Mittel zur Steuerung der Härtungsgeschwindigkeit, Netzmittel und/oder weitere an sich bekannte Mörtelzusätze zum härtbaren Bestandteil und/oder Härter enthalten sind.

6. Verwendung gemäß einem der vorhergehenden Patentansprüche, **dadurch gekennzeichnet, daß** härtungsverzögernde Substanzen, vorzugsweise Alkaliphosphate, enthalten sind.

## Claims

1. Use of a hardenable two-component mortar material comprising fine-particle cement as the hardenable constituent and water glass as the hardener, wherein the hardenable constituent and the hardener are separated in a two-chamber or multi-chamber device to prevent a reaction and can be reacted by mixing under working conditions, for fastening anchor rods and similar anchoring means in drilled holes, **characterised in that** the mortar material contains 20-55 % by weight fine-particle cement in relation to the weight of the hardener-free mortar component, with a specific surface area of 3 to 8, in particular 4 to 7 m²/g according to BET.

2. Use according to claim 1, **characterised in that** the alkali water glass is sodium silicate and/or potassium silicate.

3. Use according to one of the preceding claims, **characterised in that** the alkali silicate concentration is 20-60 % by weight in relation to the total water glass weight.

4. Use according to one of the preceding claims, **characterised in that** the weight ratio of the water contained in the water glass to cement is 0.2-2.5 to 1, preferably 0.3-1.7 to 1.

5. Use according to one of the preceding claims, **characterised** additionally by fillers, thickeners, solvents, dispersing agents, thixotropic agents, inert liquid carriers, stabilisers, means for controlling the hardening rate, wetting agents and/or other mortar additives known per se for the hardenable constituent and/or the hardener.

6. Use according to one of the preceding claims, **characterised by** substances retarding hardening, preferably alkali phosphates.

## Revendications

1. Utilisation d'un mortier durcissable à 2 composants avec du ciment fin comme composant durcissable et avec du verre soluble comme durcisseur, pour laquelle, en vue d'inhiber la réaction, le composant durcissable et le durcisseur sont séparés dans un dispositif à deux ou à plusieurs chambres et, sous des conditions d'utilisation, peuvent être amenés à réagir moyennant mélange, pour la fixation de boulons d'ancrage et de moyens d'ancrage analogues dans des trous de forage, **caractérisée en ce que** le mortier contient 20 à 55 % en poids de ciment fin, rapportés au poids du composant du mortier exempt de durcisseur, avec une surface spécifique de 3 à 8, en particulier de 4 à 7 m²/g d'après BET.

2. Utilisation selon la revendication 1, **caractérisée en ce que** le verre soluble alcalin est un verre soluble à Na et/ou à K.

3. Utilisation selon l'une des revendications précédentes, **caractérisée en ce que** la concentration en silicate de métal alcalin s'élève à 20 à 60 % en poids, rapportés au poids total du verre soluble aqueux.

4. Utilisation selon l'une des revendications précédentes, **caractérisée en ce que** le rapport pondéral de l'eau contenue dans le verre soluble au ciment est de 0,2 à 2,5 jusqu'à 1, de préférence de 0,3 à 1,7 jusqu'à 1.

5. Utilisation selon l'une des revendications précédentes, **caractérisée en ce que** des charges, des épaississants, des solvants, des dispersants, des agents de thixotropie, des supports liquides inertes, des stabilisateurs, des moyens de contrôle de la vitesse de prise, des agents tensioactifs et/ou d'autres additifs de mortiers connus en eux-mêmes sont contenus en plus du composant durcissable et/ou du durcisseur.

6. Utilisation selon l'une des revendications précédentes, **caractérisée en ce que** des substances retardatrices de prise, de préférence des phosphates de métaux alcalins, sont contenues.
